# EUROPEAN PATENT APPLICATION

(11) **EP 1 207 469 A1**
(43) Date of publication of application: **22.05.2002**
(21) Application number: 01122664.4
(22) Date of filing: 28.09.2001
(51) Int. Cl.: G06F 17/50

(54) **Method and system for evaluating environmental impact and program for realizing the same**

(30) Priority: 28.09.2000 JP 2000296725
(71) Applicant: Ricoh Company, Ltd., Tokyo 143-8555 (JP); TOHOKU RICOH CO., LTD., Shibata-machi, Shibata-gun, Miyagi 989-1695 (JP)
(72) Inventor: Kato, Hisahiro, Shibata-gun, Miyagi 989-1604 (JP); Akasaka, Tomio, Kakuda-shi, Miyagi 981-1502 (JP); Otsuki, Yoshinori, Shibata-gun, Miyagi 989-1622 (JP); Noritake, Yuji, Yokohama-shi, Kanagawa 240-0051 (JP); Hirai, Makiko, Ohta-ku, Tokyo 146-0085 (JP); Suzuki, Minoru, Yokohama-shi, Kanagawa 241-0813 (JP)
(74) Representative: Schwabe - Sandmair - Marx

(57) **Abstract**

A container for use in transporting an article is selected, based on the size and weight of the article to be transported in a product's lifecycle and information representing the number of the articles included in a product. Transportation means for transporting the article and the number of the transportation means are determined, based on the article information, information representing a distance the article to be transported, and information representing the kind and the quantity of the selected container. Further, environmental impacts of a transportation process using the transportation means selected based on the article information, the transportation information and the information representing the selected container, thereby to obtain environmental impacts of the transportation process of transporting the article.

## Description

The present invention relates to a method and system for evaluating environmental impacts in a product's lifecycle and a recording medium for realizing the same, and, more particularly, to a method, system and program for accurately obtaining environmental impacts of a product transportation process.

Well-know LCA (Life Cycle Assessment) is a technique fur evaluating environmental impacts in a product's lifecycle in a range from the manufacture of products to the dumping the products. In the LCA technique, those environmental impacts of a process of transporting the products are also to be evaluated.

In the case where to obtain the environmental impacts of the transportation process, the exhaust amount and consumption of energy resources necessary for the transportation means are the main elements for causing the environmental impacts. In the case where a truck is used as the transportation means for transporting the products, the environmental impacts of the transportation process are calculated, based on the fuel consumption of light oil to be consumed in transporting the products and parts included in each product, etc. and also an amount of toxic waste, such as CO₂ or Noₓ calculated based on the fuel consumption.

In the case where to calculate the environmental impacts of the transportation process according to a conventional LCA technique, the environmental impacts are obtained, based on the weight of target articles to be transported, the kind of the transportation means and the transportation distance.

That is, the number of transportation means required for the transportation process is obtained based on the weight of the target articles to be transported and the kind of transportation means to be employed, and the energy consumption and exhaust amount for the case where the target articles are transported using the calculated amount of the transportation means for a desired distance.

In the conventional LCA technique, in the case where a change is made in the structure of a part included in the product, material of the part, processing condition at an assembly factory or transportation means, the environmental impacts of products to be manufactured as different products from those manufactured before the change are newly obtained.

Further, in the conventional LCA technique, to calculate the environmental impacts while products are used or at a maintenance process, there may be employed a technique for calculating the environmental impacts of expendables, such as paper, printing toner, consumption of electricity while the products are used.

Since the articles, such as products and parts included in each product, are packed in a suitable container during the actual transportation process, it is very difficult to obtain the adequate number of necessary transportation means based on the weight of the articles themselves, using the conventional technique. Additionally, the environmental impacts of the transportation process could not accurately be obtained.

In the above conventional technique, the environmental impacts of those products as products different from those products manufactured before the change are newly obtained. Therefore, in the case where there are a large number of parts included in each product or there are a large number of manufacturing processes, it took a Iot of time to obtain the environmental impacts.

Further, in the conventional technique, no consideration has been made to the environmental impacts of a travelling process wherein maintenance staffs travel to a place to perform a maintenance process for products or to the environmental impacts of those parts included in each product and to be replaced during the maintenance process.

The present invention has been made in consideration of the above. It is accordingly an object of the present invention to provide an evaluation method and evaluation system for desirably calculating environmental impacts of a transportation process, and a program for realizing the above.

Another object thereof is to provide a method of evaluating environmental impacts with high efficiency, in a case where a change is made in the part structure of each product, material, processing condition, and transportation means.

Still another object thereof is to provide a method of evaluating environmental impacts of a travelling process, wherein maintenance staffs travel to a place to perform a maintenance process for a product, or with respect to parts to be replaced during the maintenance process.

In order to achieve the above object, according to the first aspect of the present invention, there is provided a method of evaluating environmental impacts in a product lifccycle, the method characterized by comprising the steps of:
selecting a container from a plurality of containers, based on article information regarding a target article to be transported in the product's lifecycle, the container being for use in transporting the target article;
determining one transportation means for transporting the target article, based on the article information, transportation information regarding a condition for transporting the at least one target article, and information specifying the container selected in the container selecting step; and
calculating an environmental impact while the target article is transported by the transportation means determined at the determining step, based on the article information, the transportation information, and the information specifying the container selected in the container selecting step.

In this case, it is preferred that
the article information include information representing a size and weight of the target article to be transported and also information representing quantity of the at least one target article to be included in a product to be manufactured;
the transportation information include information representing a distance the target article to he transported;
the container selecting step select a kind and quantity of the container, based on the information representing the size and weight of the target article and the information representing the quantity of the article to be included in the product to be manufactured; and
the transportation means determining step determine the transportation means and number of the transportation means, based on the information representing the kind and quantity of the container selected at the container selecting step and the information representing the distance the target article is to be transported.

It is preferred that the calculating step calculate an environmental impact of a process of transporting the target article to be transported by the transportation means determined at the determining step, based on an energy consumption, resource consumption and exhaust amount of the transportation means, in a case where the transportation means is used based on the article information and transportation information.

The method may be characterized by further comprising the steps of:
calculating environmental impacts respectively of processes of manufacturing the product, distributing/vending (selling) the product, using/maintaining the product, collecting/recycling the product, and dumping the product; and
calculating environmental impacts in the product's lifecycle, based on the environmental impacts of the processes, obtained in the environmental impact calculating step, and the method characterized in that
the step of obtaining the environmental impacts respectively of the processes calculates the environmental impacts respectively at the processes, based on the environmental impact calculated at the step of obtaining the environmental impact while the target article is transported.

According to the above invention, the size of the packing container necessary for transporting the article can be calculated, based on the size or weight of the target article to be transported. The transportation means having the adequate size for transportation can be determined based on the calculated size of the container and the number thereof and also the transportation distance. Hence, the simulation can be done based on the real life, thereby to obtain more accurate environmental impacts.

In order to achieve the above objects, according to the second aspect of the present invention, there is provided an environmental impact evaluation system including a controller (100), which performs operations necessary for calculating environmental impacts in a product's lifccycle, and a memory unit (300), which stores information necessary for the controller to perform the operations necessary for calculating the environmental impacts, and the system characterized in that the controller (100):
selects, from a plurality of containers, a container for use in transporting a target article to be transported, based on article information regarding the target article to be transported in the product's lifecycle and transportation information regarding a condition for transporting the target article to be transported;
determines one transportation means for transporting the target article, based on the article information, the transportation information and information specifying the selected container; and
calculates environmental impacts of a process of transporting the target article using the determined transportation means; based on the article information, the transportation information and the information specifying the selected container.

According to the above invention, the size of the packing container necessary for transporting the article can be calculated, based on the size or weight of the target article to be transported. The transportation means having the adequate size for transportation can be determined based on the calculated size of the container and the number thereof and also the transportation distance. Hence, the simulation can be done based on the real life, thereby to obtain more accurate environmental impacts.

In order to achieve the above objects, according to the third aspect of the present invention, there is provided a program for controlling a computer to execute a method characterized by comprising the steps of:
selecting, from a plurality of containers, a container for use in transporting a target article to be transported in a product's lifecycle, based on article information regarding the target article and transportation information regarding a condition for transporting the target article to be transported;
determining one transportation means for transporting the target item, based on the article information, the transportation information and information specifying the container selected at the selecting step; and
calculating an environmental impact of a process wherein the transportation means determined at the determining step is used, based on the article information, the transportation information, and the information specifying the container selected at the selecting step.

In order to achieve the above objects, according to the fourth aspect of the present invention, there is provided a method of evaluating environmental impacts characterized by comprising the steps of: storing product information including information representing product information representing a plurality of parts forming a product to he manufactured, one or more materials forming each of the plurality of parts and one or more assembly factories for manufacturing the product, and transportation information including information representing one or more transportation means for transporting the product; and calculating environmental impacts respectively of processes in a product's lifecycle of the product, based on the product information and the transportation information which are stored in the storing step, and the method characterized in that:
the calculating step, in a case where there are a plurality of combinations of the parts forming the product, the one or more materials, the one or more assembly factories and the one or more transportation means,
   obtains common elements between a first combination and second combination of the plurality of combinations and non-common elements therebetween; and
   calculates environmental impacts of a product based on the first combination, in such a manner that environmental impacts depending on the common elements between the first and second combinations are separated from environmental impacts independent of the non-common elements therebetween.

In order to achieve the above objects, according to the fifth aspect of the present invention, there is provided a method of evaluating environmental impacts, the method characterized by comprising the steps of:
calculating environmental impacts of a travelling process wherein a maintenance staff moves to a place to perform a maintenance process for a product, based on information representing an amount of resources necessary for the maintenance process, information representing an average distance the maintenance staff moves and information representing an average number of times the maintenance staff performs the maintenance process;
calculating environmental impacts of a part to be replaced during the maintenance process and included in the product, based on information representing environmental impacts of each part to be replaced during the maintenance process and information representing the average number of times the maintenance staff performs the maintenance process; and
calculating environmental impacts of the maintenance process for the product, based on information representing environmental impacts of the travelling process calculated in the step of calculating the environmental impacts of the travelling process and information representing environmental impacts representing the part to be replaced obtained in the step of calculating the environmental impacts of the part to be replaced.

These objects and other objects and advantages of the present invention will become more apparent upon reading of the following detailed description and the accompanying drawings in which:
FIG. 1 is a block diagram schematically showing the structure of an environmental-impact evaluation system according to an embodiment of the present invention;
FIG. 2 is a block diagram showing the structure of a storage section included in the environmental-impact evaluation system;
FIG. 3 is a diagram showing an example of a product information table stored in a product information database included in the storage section of FIG. 2;
FIG. 4 is a diagram showing part information tables stored in the product information database shown in FIG;
FIG. 5 is a diagram showing a material information table stored in the product information database;
FIG. 6 is a diagram showing an example of a table recording information about distances between places, stored in a location information database included in the storage section of FIG. 2;
FIG. 7 is a diagram showing an example of a material-handling-container (MHC) information table stored in an MHC information database included in the storage section of FIG. 2;
FIG. 8 is a diagram showing a transportation information table stored in a transportation information database included in the storage section of FIG. 2;
FIG. 9A is a diagram showing an example of items of environmental impact data classified according to factory, FIG. 9B is a diagram showing an example of items of environmental impact data classified according to energy resource for transportation means, and FIG. 9C is a diagram showing an example of information items of environmental impact data regarding environmental impacts of a maintenance process or while products are used;
FIG. 10 is a flowchart for explaining a process for calculating environmental impacts of a manufacture process, which process is carried out by the environmental impact evaluation system of the present invention;
FIG. 11 is a flowchart for explaining a process for calculating environmental impacts of a distribution/vending (selling) process, which process is carried out by the environmental impact evaluation system;
FIG. 12 is a flowchart for explaining a process for calculating environmental impacts while products are used or at maintenance processes, which process is carried out by the environmental impact evaluation system;
FIG. 13 is a flowchart for explaining a process for calculating environmental impacts of a disposal (dumping) process;
FIG. 14 is a flowchart for explaining a process for calculating environmental impacts by parts, in the calculation process of FIG. 13;
FIG. 15 is a flowchart for explaining a process for calculating environmental impacts by material, included in the calculation process of FIG. 13; and
FIG. 16 is a flowchart for explaining an LCA evaluation process carried out by the environmental impact evaluation system of the present invention.

A preferred embodiment of the present invention will now be explained with reference to the accompanying drawings.

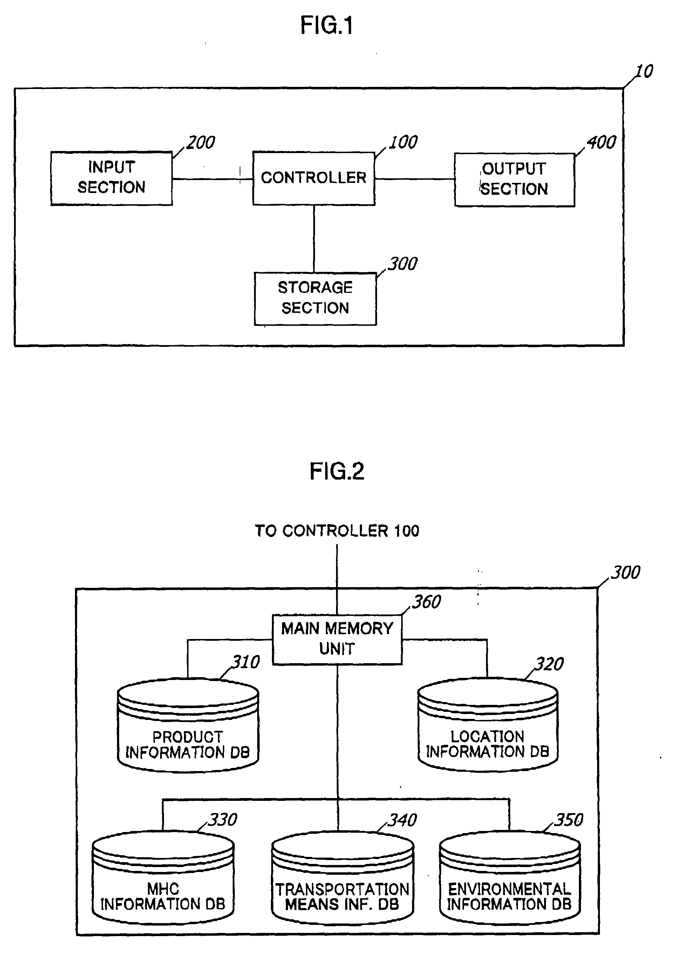

FIG. 1 is a block diagram showing the structure of an environmental impact evaluation system according to the embodiment of the present invention.

As shown in FIG. 1, the environmental impact evaluation system 10 comprises a controller 100, an input section 200, a storage section 300, and an output section 400. In the environmental impact evaluation system, the input section 200, the storage section 300, and the output section 400 are all coupled to the controller 100.

The controller 100 includes, for example, a CPU (Central Processing Unit), etc. The controller 100 controls operations of each section included in the environmental impact evaluation system, and carries out calculation processes necessary for calculating the environmental impacts.

The input section 200 includes, for example, a keyboard, a mouse, etc., and is used for inputting information necessary for the environmental impact evaluation system 10 to calculate the environmental impacts.

The structure of the storage section 300 will now be described with reference to FIG. 2.

FIG. 2 is a block diagram showing the structure of the storage section 300. As shown in FIG. 2, the storage section 300 includes various databases each including a hard-disk device, etc., and specifically includes a product information database 310, a location information database 320, a material-handling-containcr (hereinafter referred to as MHC) information database 330, a transportation information database 340, and an environmental impact information database 350. The storage section 300 further includes a main memory unit 360 including, for example, a semiconductor memory device, etc.

The product information database 310 stores information representing a group of parts employed in each product to be evaluated and information representing a group of materials used in each part of each product forming a group of products, in association with each other.

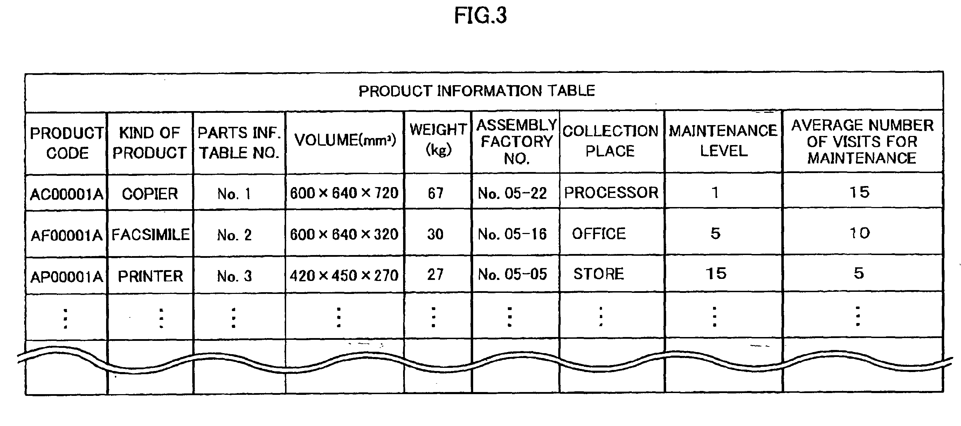

Specifically, the product-information database 310 stores various information classified according to product, in a product information table shown in FIG. 3. In particular, the product information table stores, for example, the following nine information items of: information (product number) identifying a product code of a product; a kind of the product; information specifying a part information table (described later) storing information representing a group of parts for forming the product; volume information representing the size (volume) of the product; information representing the weight of the product; information specifying a factory wherein the product is assembled; information representing a point (seller, office, etc.) to collect the product to be recycled/dumped; information representing a maintenance level based on which the environmental impacts of a maintenance process is evaluated; and an average number of times the maintenance process is done for the product. Those information items are all stored in the product information table, before the calculation of the environmental impacts.

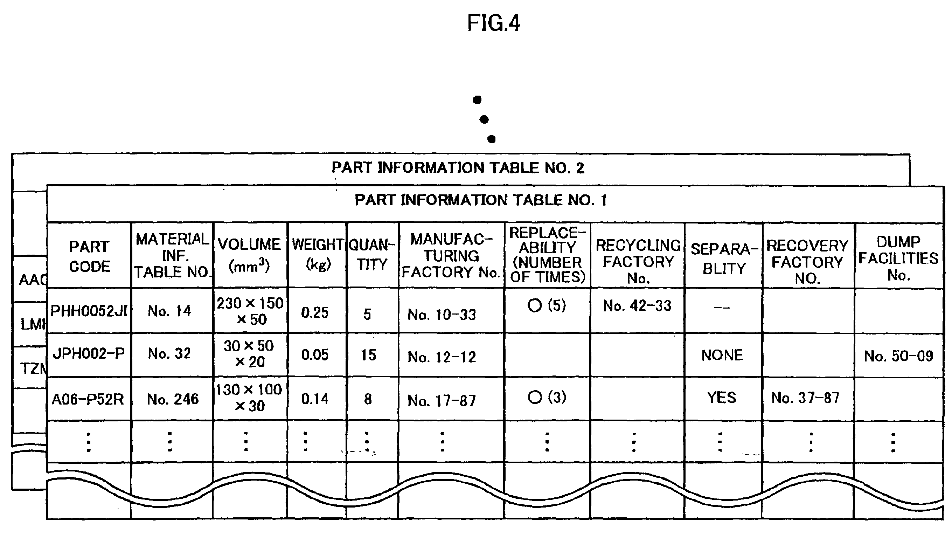

FIG. 4 is a diagram showing examples of part information tables specified in the product information table of FIG. 3. Each of the part information tables is prepared for each product, and stores information regarding parts forming the product. Each part information table stores, for example, the following eleven items: part code information specifying a kind of parts; information specifying a material information table storing information representing a group of materials for forming the kind of parts; volume information representing the size (volume) of the kind of parts; information representing the weight of the kind of parts; information representing the number of the kind of parts employed in the product; information specifying a factory wherein the kind of parts are made; information (showing the average number of replacing the kind of part in parentheses) representing whether the kind of parts are likely to be replaced due to the wearing out of the parts while the corresponding product is used; information specifying a factory wherein the kind of parts are processed to be recycled if possible; information representing whether the kind of parts can be taken apart into materials; information specifying a factory wherein the kind of separable parts are taken apart; and information specifying a place to dump the kind of parts which can not be recycled or taken apart. The above eleven items of information are stored in each of the part information tables, before the calculation of the environmental impacts.

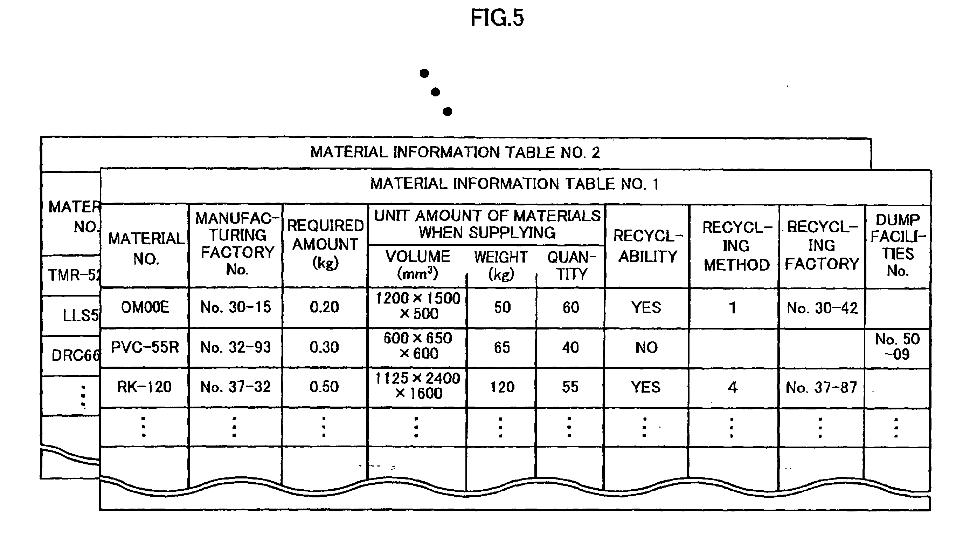

FIG. 5 shows examples of the material information tables specified in the part information table. The material information table is prepared for each kind of parts, and stores information regarding materials forming the kind of parts. In more particular, the material information table stores the following eight items of: code information specifying a kind of materials; information representing a factory wherein the kind of materials are made; the quantity of the kind of materials necessary for manufacturing each part; information representing the volume, weight and number of the kind of materials to be brought to a factory for manufacturing the parts; information representing whether the kind of materials are recyclable; information (various recycling methods are denoted by symbolic numbers, respectively, in FIG. 5) representing a recycling method of recycling the recyclable materials; information specifying a factory wherein the recyclable materials are processed to be reused; and information specifying a place to dump the materials. The above information items are stored in the material information table, before the calculation of the environmental impacts.

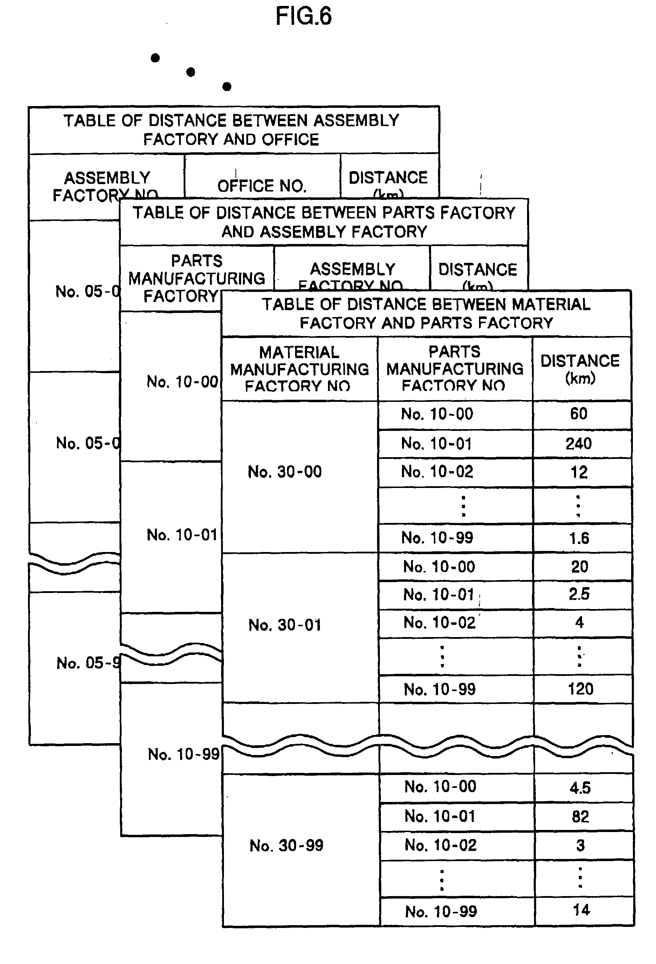

The location information database 320 stores location information of factories and information regarding distances between the factories. The location information represents the locations of a material manufacturing factory, a part manufacturing factory, a product assembly factory, a recycling factory, a separation factory, offices, and stores, respectively. The location information is shown in association with an ID (identification) number given to each of the factories, etc. The distance information represents distances between places along which products or parts are transported. For example, the distance information may represent a distance between the material manufacturing factory and the part manufacturing factory, a distance between the part manufacturing factory and the product assembly factory, a distance between the product assembly factory and an office, a distance between an office and a store, a distance between a store and the separation factory, a distance between an office and the separation factory, a distance between the separation factory and the recycling factory, and a distance between the separation factory and the place to dump target products, etc. The location information database 320 includes a plurality of tables each storing information representing distances between places, as shown in FIG. 6, as distance information.

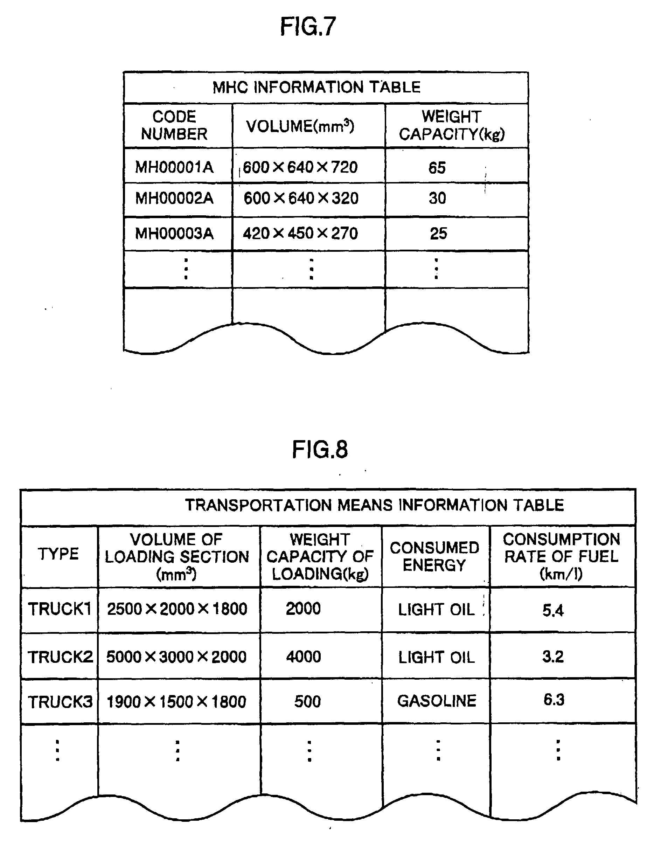

The MHC information database 330 stores information representing MHC as containers to be used in transporting materials, part and products, etc. Specifically, as shown in FIG. 7, the MHC information database 330 stores information representing the size (volume) and weight capacity of each MHC. In this embodiment, those cardboard boxes to be used in transporting products are included in the MHC.

The transportation information database 340 stores information representing transporting means for transporting materials, parts and products, etc. In more particular, as shown in FIG. 8, the MHC information database 330 stores information representing a kind of the transportation means, the size (volume) of the cargo of the transportation means, a type of an energy resource to be employed in the transportation means and its consumption rate.

The environmental impact information database 350 classifies and stores quantitative information of the environmental impacts of each of a product manufacturing process, a distribution/vending process, a maintenance (while products are used) process, a collection/recycling process, and a dumping process, according to predetermined category. The information stored in the environmental impact information database 350 includes: information representing environmental impacts of a manufacturing process by each factory; information representing environmental impacts of processes of manufacturing materials, parts, and products; information representing environmental impacts of the maintenance process of maintaining products; and information representing environmental impacts of a process of dumping products at recycling factory, etc.

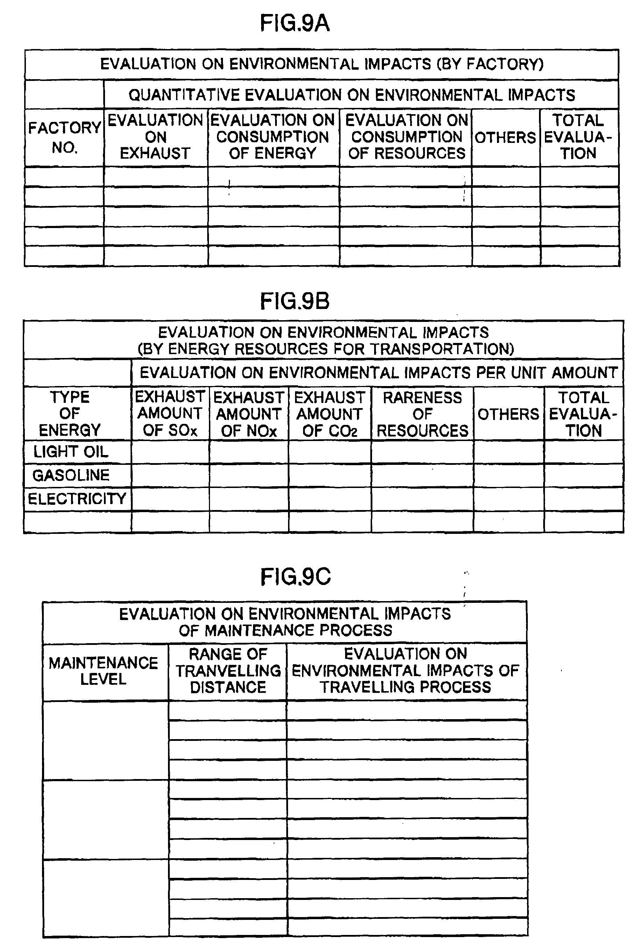

FIGS. 9 are diagrams each showing an example of information items representing the environmental impacts, which are stored in the environmental impact information database 350. FIG. 9A is a diagram showing an example of information representing the total environmental impacts, by factory, in the case where such environmental impacts are obtained based on the quantitative evaluation information. The amount of the environmental impacts differs in various factories, for manufacturing materials, manufacturing parts, assembling products, depending on the processes done in the factories and the size of the factories. Hence, data for evaluating environmental impacts are stored in a predetermined table, by factory. In this case, data stored in this predetermined table is quantitative data including: waste evaluation information showing the quantitative environmental impacts, obtained based on the exhaust amount of SOₓ, NOₓ, CO₂; energy-consumption evaluation information showing the quantitative environmental impacts, obtained based on the energy consumption during the operations of each factory; and resource-usage evaluation information showing the quantitative environmental impacts, obtained based on the usage amount of to-be-exhausted resources used for the energy consumption. In addition, the data stored in the table includes total evaluation information showing the total quantitative environmental impacts of each factory, based on the above information.

FIG. 9B is a diagram showing an example of environmental impacts of the time of transporting materials, parts, and products, which are calculated by used energy. In this case, the data stored in the table includes the exhaust amounts of SOₓ, NOₓ and CO₂ per unit usage amount of used energy resource, the rareness of the case where the used energy resource is a to-be-exhausted resource, and the quantitative data showing the environmental impacts obtained based on the amounts and the rareness, by each used energy resource, as the total evaluation information.

FIG. 9C is a diagram showing an example of calculation data of the environmental impacts of the maintenance process. In this case, stored in a table includes maintenance level information representing, distance range information, and moving-environmental-impact information. Specifically, the maintenance level information represents the maintenance level which is set for each kind of product, based on the number of staffs for the maintenance process, used vehicle, the size of the maintenance equipment, and the frequency of replacing the expendables. The distance range information represents the distance the maintenance staff moves for the maintenance process, i.e. a plurality of ranges (e.g. 1-5km, 5-10km, 10-15km, and 15km or more) maintenance staff moves from the store (or an office) to each customer's. The moving-environmental-impact information represents the environmental impacts per maintenance process, based on the maintenance level and the distance range. The average number of times the maintenance is done, which is stored in the product information table, is added to this moving-environmental-impact information, thereby obtaining the quantitative environmental impacts of the maintenance process, by each kind of product.

The environmental impact evaluation information by factory, the environmental impact information by used-energy resource for transportation means, and the environmental impact evaluation information at the maintenance process are only the examples of the data stored in the environmental impact information database 350. Environmental impact evaluation items classified according to any other various categories and quantitative environmental impact evaluation data are stored in the environmental impact information database 350. Those evaluation items and calculation method, as explained in the above example, are employed for the descriptive purposes only. Any other arhitrary evaluation items and evaluation methods may be employed.

The main memory unit 360 is used as a work area for temporarily storing results of calculations done by the controller 100. Along with the operations of the controller 100, the main memory unit 360 temporarily retains: information that the controller 100 registers in each database, such as the product information database 310, etc.; information that the controller 100 retrieves from each database; halfway or final results of calculation for obtaining the environmental impact; and information to be displayed on the output section 400.

The output section 400 may be a display device including a CRT (Cathode Ray Tube) or LCD (Liquid Crystal Display) or a printing system such as a printer, etc., and outputs processing results of the environmental impact evaluation system 10.

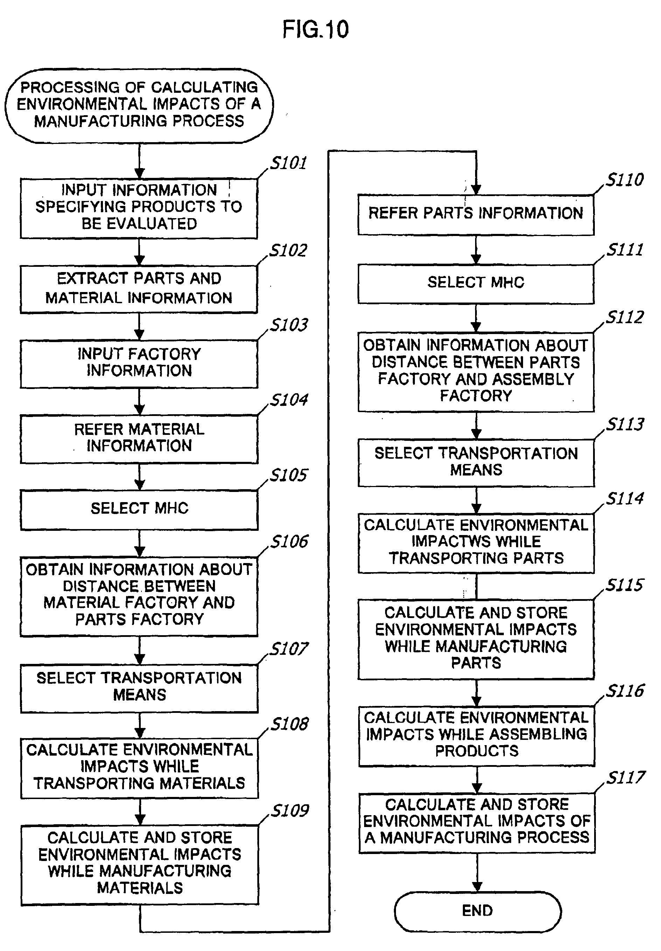

Operations of the environmental impact evaluation system 10 according to this embodiment will now be explained with reference to FIGS. 10 to 16.

In this embodiment, the environmental impacts of a manufacturing process, distribution/vending process, maintenance process, collection/recycling process, and dumping process are obtained, with respect to a kind of product. Further, the environmental impacts of the various processes are added with each other, thereby calculating and evaluating the environmental impacts in the product's life cycle.

With reference to the flowchart of FIG. 10, a process for calculating the environmental impacts of a process of manufacturing products, which process is carried out by the environmental impact evaluation system 10 of this embodiment.

A user of the environmental impact evaluation system 10 inputs information representing a target product to be evaluated, from the input section 200 (Step S101). In this case, the user selects a predetermined product from a list of products, based on the information of the product information database 310, and specifics a target product to be evaluated by inputting a serial number assigned to each product.

The controller 100 searches the product information database 310 for part information corresponding to the target product input in the step S101 and material information corresponding to each part included in the part information (Step S102).

The user inputs a location of an assembly factory wherein the input kind of product is assembled, from the input section (Step S103). In this case, the user selects a desired factory from a list of factory locations, based on the information of the location information database 320, and inputs an ID number assigned to the selected factory, thereby to specify the location of the assembly factory.

Aftcr this, the controller 100 refers to the material information and part information obtained in the step S102, and acquire producing-place information of each material and an amount of each kind of materials necessary for manufacturing a unit amount of the product (Step S104).

The controller 100 searches the MHC information database 330 for the adequate size and number of MHCs for use in transporting parts including each of the materials to their corresponding manufacturing factory, based on the size information and usage amount of each of the materials shown in the material information obtained in the step S102 (Step S105).

The controller 100 searches the location information database 320 for a transportation distance between each material manufacturing factory and a part manufacturing factory to which one or more kinds of materials should be brought, based on factory information representing the material manufacturing factories and part manufacturing factories shown respectively in the material information and part information obtained in the step S102 (Step S106).

Subsequently, the controller 100 searches the transportation information database 340 for suitable transportation means for transporting materials and the adequate size and necessary number of the transportation means, based on the size and number of MHCs obtained in the step S105 and the transportation distance between the material and part manufacturing factories obtained in the step S106 (Step S107). In this case, the controller 100 may show several combinations of the adequate transportation means, and the size and number of transportation means for use in transporting the kind of materials. Then, the user can select a desired combination from the shown combinations, in the consideration of some conditions of the transportation means possessed by the factory.

The controller 100 accesses the environmental impact information database 350. The controller 100 calculates the environmental impacts of the transporting process, based on information (e.g. the loadage, the consumption of energy, and the number of required carts, in the case where the transportation means is a truck) representing the transportation means selected. in the step S107 and information representing the transportation distance obtained in the step S106. The controller 100 retrieves the environmental impacts of the transportation process, wherein the transportation means selected in the step S107 travels without any load for the distance obtained in the step S106, from the environmental impact information database 350. After this, the controller 100 adds the retrieved information to the transportation-process environmental impacts. This is to calculate more accurate environmental impacts in consideration of the environmental impacts on the way back from the target place to bring the materials, parts, or products.

The controller 100 searches the environmental impact information database 350 from the environmental impact information at the process of manufacturing the materials. Further, the controller 100 adds the searched information to the environmental impact information at the process of transporting the material, obtained in the step S108. This realizes in calculating tile environmental impacts of the process of manufacturing the kind of materials. Then, the controller 100 temporarily stores the calculated result in the main memory unit 360 (Step S109). Note that the environmental impact information at the process of manufacturing the kind of materials includes quantitative information representing those effects on the environmental, resulting from the environmental impact factors, such as the exhaust from the material manufacturing factory, the consumed energy and resources.

Likewise the calculation of the environmental impacts of the transportation process for the kind of materials, the controller 100 calculates the environmental impacts of the process of transporting each part. Specifically, the controller 100 acquires the producing-place information of each part from the part information obtained in the step S102 and the usage amount of the parts necessary for manufacturing a unit number of the products (Step S110). The controller 100 searches the MHC information database 330 for the adequate size and number of transportation means for use in transporting the parts to a product assembly factory, based on the size information and usage mount of each part shown in the part information (Step S111). The controller 100 searches the location information database 320 for the transportation distance between the manufacturing factory for each kind of part and their corresponding product assembly factory, based on the producing-place information of each kind of part shown in the information in the step S102 and the location of each assembly factory input in the step S 103 (Step S112). The controller 100 searches the transportation information database 340 for the adequate transportation means for transporting the kind of parts, the size and number of the MHCs for use in transporting the kind of parts, based on the size and number MHCs used for the transportation process obtained in die step S111 and the transportation distance between the part manufacturing factory obtained in the step S112 and its corresponding product assembly factory (Step S113). Further, the controller 100 refers to the environmental impact information database 350 to calculate the environmental impacts of the process of transporting the kind of parts, based on information representing the selected transportation means and the transportation distance obtained in the step S112 (Step S114). The controller 100 retrieves, from the environmental impact information database 350, the information representing the environmental impacts of the process, wherein the selected transportation means carrying no load travels for the transportation distance obtained in the step S112, and adds the retrieved information to the transportation-process environmental impacts.

The controller 100 refers to the environmental impact information database 350, and acquire information representing the environmental impacts of the process of manufacturing parts. The controller 100 adds the acquired information to the information representing the environmental impacts of the process of transporting the parts, calculated in the step S114. By so doing, the environmental impacts of the process of manufacturing the parts can be calculated. Then, the controller 100 temporarily stores thus calculated environmental impacts in the main memory unit 360 (Step S115). Note that the information representing the environmental impacts of the process of manufacturing the parts includes quantitative information representing the effects on the environment, resulting from environmental impact factors, such as the exhaust from the part manufacturing factory and the consumption of energy/resources at the factory.

The controller 100 refers to the environmental impact information database 350, and acquires information representing the pre-stored environmental impacts of a process of assembling products, with respect to the target product to be evaluated, specified in the step S101 (Step S116). Note that the information representing the environmental impacts of the process of assembling the products includes quantitative information representing the effects on the environment, resulting from the environmental impact factors, such as the exhaust from the corresponding factory and the consumption of energy/resources thereat.

The controller 100 adds the information calculated in the step S109, the information calculated in the step S115, and the information obtained in the step S116, thereby to obtain the environmental impacts of the manufacturing processes of manufacturing the products. Further, the controller 100 stores thus obtained environmental impacts temporarily in the main memory unit 360 (Step S117), and thus completing the process of calculating the environmental impacts of the manufacturing process.

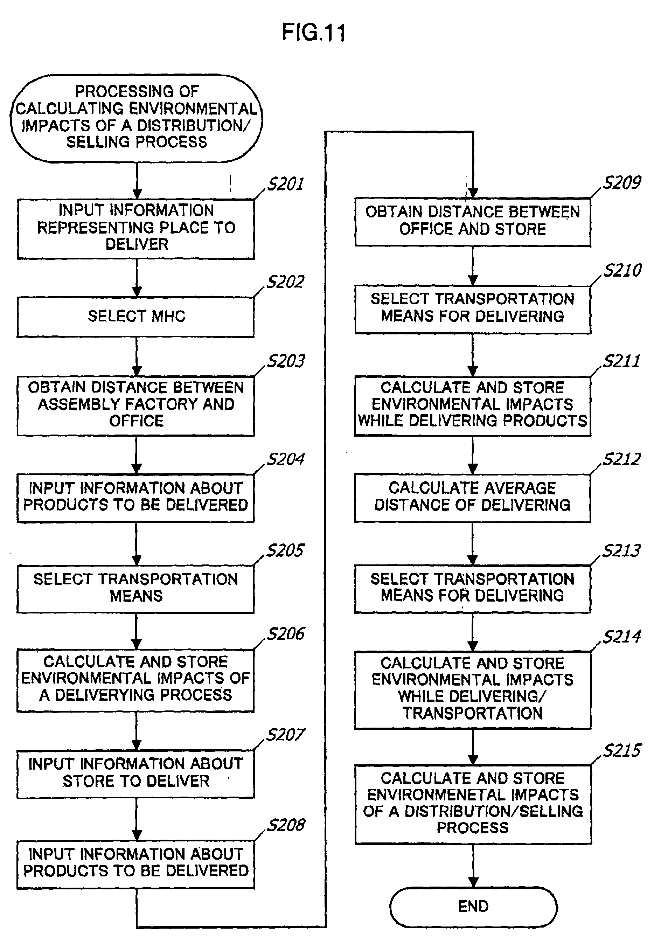

With reference to the flowchart of FIG. 11, explanations will now be made to a process of calculating the environmental impacts of a distribution/vending process, which process is carried out by the environmental impact evaluation system 10 of this embodiment.

The user inputs, from the input section 200, information representing a desired place (a store, office, etc.) to deliver products (Step S201). That is, the user inputs location information of a place (a wholesaler, or a branch office of a manufacturer, etc.) to deliver target products. In this case, the user selects the place from a list of places included in the information of the location information database 320, or inputs an ID number assigned to the place, so as to complete specifying the desired place.

The controller 100 searches the product information database 310 for the size information of the target products to be evaluated input in the step S101 included in the flowchart of FIG. 10. Subsequently, the controller 100 selects one or more adequate MHCs for transporting the products, from the information of the MHC information database 330, based on the searched size information (Step S202).

The controller 100 refers to the location database 320, based on the information input in the step S103 shown in FIG. 10 and the information input in the step S201, to calculate the transportation distance between the corresponding product assembly factory and the target place to deliver the products (Step S203).

The user inputs, from the input section 200, delivery information representing one or more kinds of target products to be delivered (Step S204). Particularly, the user inputs the number of products to be delivered to the target place.

The controller 100 refers to the transportation information database 340, based on the size of MHCs selected in the step S202, the transportation distance calculated in the step S203, and the number of products to be delivered input in the step S204. Then, the controller 100 selects the adequate transportation means and its size suitable for transporting the products (Step S205).

The controller 100 refers to the environmental impact information database 350, based on the transportation distance calculated in the step S203 and the information representing the transportation means selected in the step S205. Subsequently, the controller 100 calculates the environmental impacts of the process of transporting the corresponding products from the their assembly factory to the place to deliver. The controller 100 retrieves, from the environmental impact information database 350, the environmental impacts of the process, wherein the selected transportation means travels without any load for the transportation distance obtained in the step S203, and adds the retrieved information to the transportation-process environmental impacts. The controller 100 then temporarily stores this information in the main memory unit 360 (Step S206).

Based on the information of the location information database 320, the controller 100 displays a list of stores managed by the place input in the step S201, on the display device or the like of the output section 400 (Step S207). Then, the user operates the input section 200 to select a desired stores from the displayed list.

The user operates the input section 200, and inputs the number of products to be delivered to the stored input in the step S207 (Step S208).

Further, the controller 100 refers to the location information database 320, and calculates the transportation distance between the place and the store input in the step S207 (Step S209).

The controller 100 refers to the transportation information database 340, based on the size information selected in the step S202, the number input in the step S208, and the transportation distance calculated in the step S209, to select the adequate transportation means and its size suitable for transporting the products (Step S210).

The controller 100 refers to the environmental impact information database 350, based on the transportation distance calculated in the step S209 and the information representing the selected transportation means, and calculates the environmental impacts of the process of transporting the products from the corresponding place to the stores. Further, the controller 100 acquires, from the environmental impact information database 350, the environmental impacts of the process, wherein the selected transportation means travels without any load for the transportation distance obtained in the step S209, and adds the acquired information to the transportation-process environmental impacts. The controller 100 temporarily stores resultant information in the main memory unit 360 (Step S211).

The controller 100 accesses the location information database 320, and extracts, therefrom, information representing the store managed by the office, etc. input in the step S201. Then, the controller 100 calculates a management area corresponding to each store, i.e. the average distribution distance between each store and the end users (Step S212).

The controller 100 refers to the transportation information database 340, based on the size information selected in the step S202, the number input in the step S208, and the average round distribution distance calculated in the step S212. Then, the controller 100 selects the adequate transportation means and its size suitable for transporting the products to the store (Step S213).

The controller 100 refers to the environmental impact information database 350, based on the average round distribution distance calculated in the step S212 and the transportation means selected in the step S213, and calculates the environmental impacts of the process of distributing the products from the store to the end users. In most cases, the individual products are distributed to the end users, respectively. Hence, the transportation means with a little load of the products is to deliver the products, at a low occupying percentage of the load. Thus, in such a case, as compared to the case where to transport products in the distance between assembly factory-office and between the office-store, the environmental impacts of each product at the transporting process are expected high. In consideration of the above, the expected amount of value should be weighted to the environmental impacts of each product, so as to obtain the environmental impacts of the distribution/transportation process. The amount of value to be weighted may be obtained based on experiential data with respect to each product, and a value adjusted based on the distribution performance, thereby to appropriately obtain the amount of value to be weighted.

The controller 100 retrieves, from the environmental impact information database 350, the environmental impacts of the process, wherein the transportation means selected in the step S213 travels without any load for the distribution distance obtained in the step S212, and adds the retrieved information to the transportation-process environmental impacts. Then, the controller 100 temporarily stores thus obtained information in the main memory unit 360 (Step S214).

The controller 100 adds the information obtained in the step S206, the information obtained in the step S211, and the information obtained in the step S214 altogether, so as to calculate the environmental impacts of the distribution/vending process for the products. Then, the controller 100 temporarily stores thus obtained environmental impacts in the main memory unit 360 (Step S215), and thus completing the process of calculating the environmental impacts of the distribution/vending process.

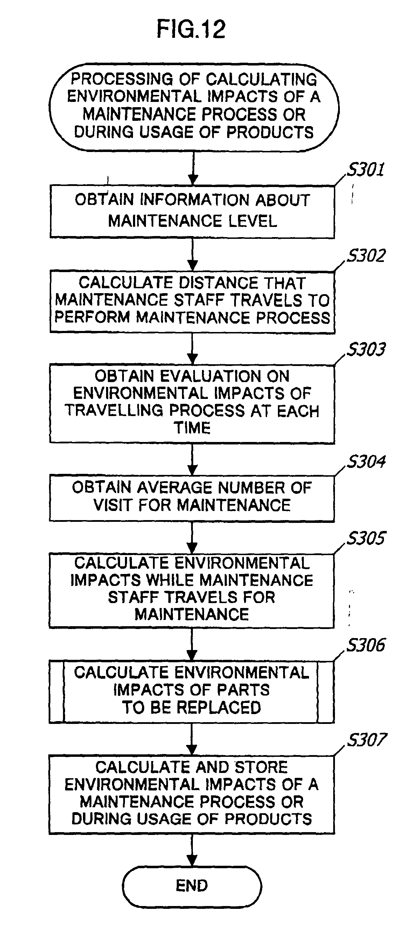

Explanations will now be made to a process of calculating the environmental impacts while products are used or of the maintenance process, which process is carried out by the environmental impact evaluation system 10, with reference to the flowchart of FIG. 12.

Specifically, explanations will now be made to an example of a case wherein the environmental impacts, while products are used or of the maintenance process, are evaluated, using information items of environmental impacts of the maintenance process, as shown in FIG. 9C.

The controller 100 refers to the product information table included in the product information table 310, and acquires a maintenance level of target products (Step S301). As explained above, a maintenance level is numerical information representing a level set for each product, based on the number of staffs required for a maintenance process, a to-be-used or used vehicle, the size of the maintenance equipment, and the frequency of replacing the expendables, etc. Further, the maintenance level corresponds to a quantitative level of required staff and resources.

The controller 100 obtains the average travelling distance of each staff required for the maintenance process in a target area to be evaluated (i.e. a target area for the process of calculating the environmental impacts of the distribution/vending process) in relation to the products (Step S302). In this case, based on the target office (place) input in the step S201 shown in FIG. 11, the controller 100 acquires the distance between the office to the entire stores managed by the office from the location information database 320. Then, the controller 100 obtains an average weight value to be added to the acquired information per product. The controller 100 sets thus obtained distance to which the weight is added, as the average travelling distance in the case of the maintenance process within the corresponding area.

In the table shown FIG. 9C, the average travelling distance is classified in either one of a plurality of ranges between 1 and 5km, 5 and 10km, 10 and 15km, and 15km and more, respectively. The controller 100 obtains quantitative data of the environmental impacts of the process, wherein the maintenance staff moves from one place to another to perform the maintenance process at a time, based on the distance range and the maintenance level (Step S303).

The controller 100 retrieves the average number of times the staffs have performed the maintenance process for each type of product, from the product information table of the product information database 310 (Step S304). The retrieved value data represents the average value of the number of times the staffs have performed the maintenance process necessarily carried out while each type of products are used.

The controller 100 obtains the environmental impacts of the process, wherein. the maintenance staffs move from one place to another to execute the maintenance process, using the environmental impact data obtained in the step S303 and the average data retrieved in the step S304 (Step S305).

The controller 100 obtained the environmental impacts of each part to be replaced at the maintenance process (Step S306). In this case, the controller 100 searches the part information table for information corresponding to the type product registered in the product information database 310. The controller 100 then acquires environmental impact data in a part's life cycle, for the part to which information, representing that the part is to be replaced with anew part at the maintenance process, is attached. Such actions of the controller 100 for obtaining the environmental impacts of the part are achieved by performing the above-described process for evaluating the environmental impacts of the product. Hence, the explanations will not be made to the process for calculating the environmental impacts of any of the parts to be replaced at the maintenance process.

The controller 100 obtains the environmental impacts of any of the to-be-replaced parts, included in a product to be evaluated, based on the environmental impacts and the average number of times the replacing is done for each kind of to-be-replaced part.

The controller 100 calculates the environmental impacts while the kind of product is used or of the maintenance process, based on the data obtained in the step S305 and the data obtained in the step S306, and temporarily stores the calculated environmental impacts in the main memory unit 360 (Step S307), and thus completing the process for calculating the environmental impacts while the product is used or of the maintenance process.

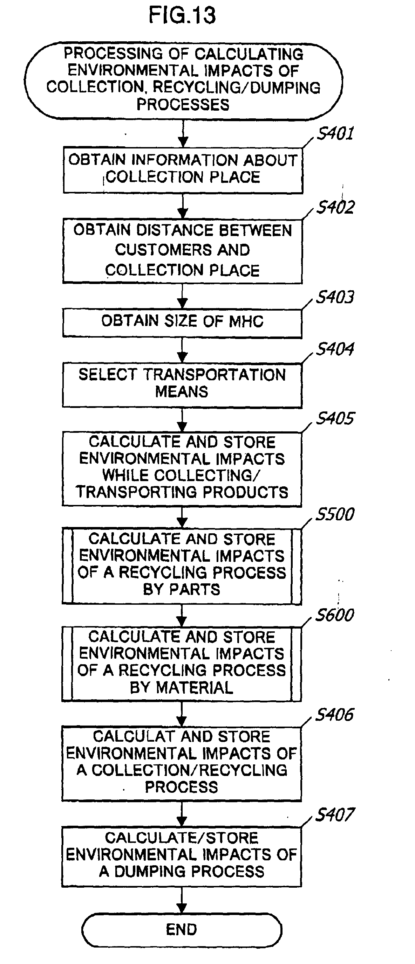

Explanations will now be made to a process for collecting/recycling products with reference to the flowcharts of FIGS. 13 to 15.

The controller 100 refers to the product information table of the product information database 310, and acquires information representing a place to collect the product (Step S401). The information acquired by the controller 100 represents a suitable place for collecting the products, such as a processing place (company, organization, business), office at the manufacturer, store, etc., depending on the size of each product.

The controller 100 calculates the distance between customer and the collection place, based on the collection place information acquired in the step S401 (Step S402). Specifically, in the case where the collection place is a store, the controller 100 refers to the average round distribution distance obtained in the step S212 shown in FIG. 11. On the other hand, in the case where the collection place is an office, the controller 100 refers to a summed value of the average distribution distance obtained in the step S212 shown in FIG. 11 and the distance calculated in the step S209. In addition, in the case where the collection place is a processor, the controller 100 refers to the summed value of the average round distribution distance obtained in the step S212 and the distance obtained in the step S209 and also a summed value of the distances between the office and a predetermined processing place(s) which are registered in the location information database 320.

Let it be assumed that there are a number of parts (including the exterior parts) which are recyclable in products, and that adequate MHCs for protecting things contained in the MHCs are employed. The controller 100 retrieves the size information representing the MHC selected in the step S202 shown in FIG. 11 (Step S403).

The controller 100 determines transportation means for collecting target products or parts (Step S404). In this case, the controller 100 determines one transportation means suitable for the size of the MHC which is obtained in the step S403, as means for collecting the target products individually. However, in the case where a plurality of products of the same kind are collected, the user inputs the number of the target products to be collected, so as to determine the appropriate size of transportation means, based on the size information and the number of target products.

The controller 100 accesses the environmental impact information database 350, and obtains the environmental impacts of the collection process, based on the distance obtained in the step S402 and the transportation means determined in the step S404. In the case where the transportation means is used at a low occupied percentage thereof, the controller 100 adds a predetermined amount of weight to predetermined data, likewise the procedure (the step S214 in FIG. 11) for calculating the environmental impacts of the process of distributing the products (or parts, etc.). Further, the controller 100 searches the environmental impact information database 402 for the environmental impacts of the process, wherein the transportation means determined in the step S404 moves without any load for the transportation distance obtained in the step S402, and adds the searched data to the environmental impacts of the transportation process. The controller 100 temporarily stores thus obtained information in the main memory unit 360 (Step S405).

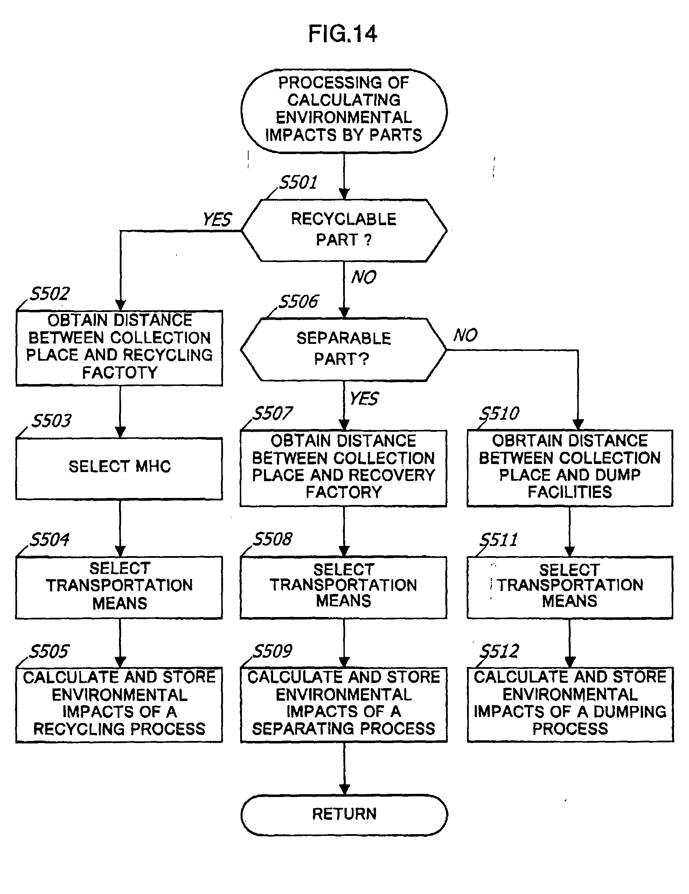

The controller 100 carries out a process for calculating the environmental impacts of each part included in each of the collected products (Step S500). The process for calculating the environmental impacts of each part will now be explained with reference to the flowchart of FIG. 14. The controller 100 refers to a part information table regarding a part and included in the product information database 310, and determines whether the part can be recyclable (Step S501). That is, the part information table stores information specifying a recycling factory, in the case where the part can be recycled. Hence, based on this determination, the controller 100 determines whether the part can be recycled.

In the case where it is determined that the part can be recycled in the step S501, the controller 100 searches the location information database 320 for the distance between the collection place and the recycling factory, based on the information obtained in the step S401 and the information obtained in the step S501 (Step S502).

In this case, the part is recycled without changing its style, function, etc. Hence, for those used parts, MHCs for protecting the parts during the transportation are employed. Therefore, the controller 100 refers to a corresponding part information table of the product information database 310, and acquires the size information of the recycled parts, so as to determines an appropriate kind of MHCs based on the information (Step S503).

The controller 100 accesses the transportation means information database 340, and selects one transportation means suitable for transporting parts between the collection place and recycling factory, based on the information regarding the size of MHCs and obtained in the step S503 (Step S504). It can be considered that a predetermined number of the recyclable parts are transported to the recycling factory at once. Thus, the user determines the number of recyclable parts based on the past statistics data, and selects suitable transportation means in consideration of the input number of recyclable parts.

The controller 100 then accesses the environmental impact information database 350, and obtains the environmental impacts of the process of transporting the parts between the collection place and the recycling factory, based on the distance obtained in the step S502 and the transportation means selected in the step S504. Here, the controller 100 searches the environmental impact information database 502 for the environmental impacts of the process, wherein the transportation means selected in the step S504 and moves without any load for the distance obtained in the step S502, and adds the searched data to the environmental impacts of the transportation process.

Further, the controller 100 extracts the environmental impact information with respect to the recycling factory, from the environmental impact evaluation information (by factory) stored in the environmental impact information database 350, and adds the extracted information to the environmental impacts of the transportation process, thereby to obtain the environmental impacts of the recyclable parts. The controller 100 temporarily stores thus obtained information in the main memory unit 360 (Step S505), and then returning back to the flowchart of FIG. 13.

For any of those parts which are determined as not recyclable in the step S501, the controller 100 determines whether each of the non-recyclable parts can be taken apart into materials (Step S506). In this case, the controller 100 refers a corresponding part information table of the product information database 310, and makes the above determination based on information representing whether each of the non-recyclable parts can be separated (divided) into materials.

For any of those parts which are determined as dividable in the step S506, the controller acquires the distance between the collection place and the separating factory, wherein the dividable parts are taken apart, from the location information database 320, based on the information obtained in the step S401 shown in FIG. 13 and the information specifying this factory recorded in the part information table (Step S507).

Then, the controller 100 selects one transportation means suitable for transporting the parts between the collection place and the separating factory, based on the size information of the parts to be taken apart recorded in the corresponding part information of the product information database 310 and the distance information obtained in the step S507 (Step S508). It can be considered that a predetermined number of dividable parts arc transported as unit. Hence, the controller 100 selects the number of dividable parts to be transported based on the past statistics data, and selects one transportation means in consideration of the input number of parts.

The controller 100 accesses the environmental impact information database 350, and obtains the environmental impacts of the transportation process, based on the distance information obtained in the step S507 and the transportation means selected in the step S508. The controller 100 retrieves, from the environmental impact information database 350, the environmental impacts of the process, wherein the transportation means selected in the step S508 carrying moves without any load for the transportation distance obtained in the step S507, and adds the retrieved information to the environmental impacts of the transportation process. The controller 100 obtains the environmental impacts of the separation process, from the environmental impact evaluation information (by factory) of the environmental impact information database 350, and adds the obtained information to the environmental impacts of the transportation process, so as to obtain the environmental impacts of the dividable parts. Then, the controller 100 temporarily stores thus obtained information in the main memory unit 360 (Step S509), and hence returning back to the flowchart of FIG. 13.

For any of those parts which are determined as not dividable in the step S506, the controller 100 calculates the environmental impacts of the process of dumping waste. The controller 100 retrieves the distance between the collection place and a place to, dump the waste, from the location information database 320, based on the collection place obtained in the step S401 shown in FIG. 13 and information specifying the place to dump the waste and recorded in the part information table of the product information table of the product information database 310 (Step S510).

Subsequently, the controller 100 searches the transportation means information database 340 for one transportation means suitable for transporting the parts for the distance between the collection place and the place to dump the waste, based on the size information of the parts stored in the part information table (Step S511). It can be considered that a predetermined number of waste parts are transported to a waste-processing factory. Hence, the controller 100 determines the number of waste parts to be transported, based on the past statistics data, and selects one transportation means in consideration of the input number of waste parts.

The controller 100 access the environmental impact information database 350, and obtains the environmental impacts of the process of transporting the waste for the distance between the collection place and the waste-processing factory, based on the distance information obtained in the step S510 and the transportation means selected in the step S511. In this case, the controller 100 acquires, from the environmental impact information database 350, the environmental impacts of the process, wherein the transportation means selected in the step S511 moves without any load for the distance obtained in the step S510, and adds the acquired information to the environmental impacts of the transportation process. The controller 100 acquires environmental impact information of the waste process, from the environmental impact evaluation information (by factory) of the environmental impact information database 350, and adds the acquired information to the environmental impacts of the transportation process, so as to obtain the environmental impacts of the dumping process. Then, the controller 100 temporarily stores the obtained environmental impact information in the main memory unit 360 (Step S512), and then returning back to the flowchart shown in FIG. 13.

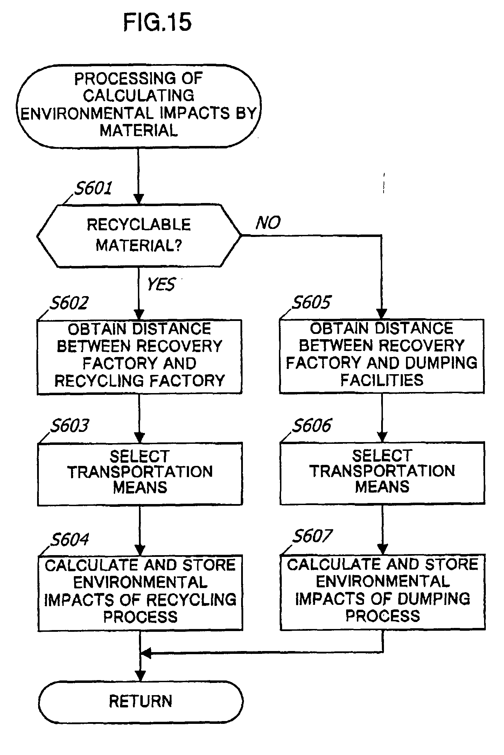

For any of those parts determined as dividable in the step S506 included in the flowchart shown in FIG. 14, the controller 100 carries out a process for calculating the environmental impacts of each material included in the parts (Step S600). Explanations will be made to the process for calculating the environmental impacts of each material, with reference to the flowchart of FIG. 15.

The controller 100 accesses the product information database 310, refers to the material information table, and determines whether the material can be recycled (Step S601).

In the case where it is determined that the material can be recycled in the step S601, the controller 100 searches the location information database 320 for the distance between the separating factory and a recycling factory, based on the information obtained in the step S507 shown in FIG. 14 and the information specifying the recycling factory recorded in the material information table (Step S602).

The controller 100 searches the transportation means information database 340 for one transportation means suitable for transporting the material to be recycled (Step S603). In this case, the recyclable material is likely to be divided into small pieces, and it is hard to acquire the size information of the small pieces. Note that the transportation means to be used in transporting the small pieces of materials is set in advances, using the past statistics data. Hence, the controller 100 selects the set transportation means, and decides the required number of transportation means based on the weight of the materials to be transported.

The controller 100 accesses the environmental impact information database 350, and obtains the environmental impacts of the process of transporting the materials to be recycled for the distance between the separating factory and recycling factory, based on the distance information obtained in the step S602 and the transportation means information selected in the step S603. The controller 100 searches the environmental impact information database 350 for the environmental impacts of the process, wherein the transportation means selected in the step S603 and moves without any load for the distance obtained in the step S602, and adds the searched information to the environmental impacts of the transportation process. The controller 100 refers to the environmental impact evaluation information stored in the environmental impact information database 350, and obtains the environmental impacts of the recycling process at the recycling factory. Then, the controller 100 adds the obtained environmental impacts to the environmental impacts of the transportation process, and temporarily stores thus obtained environmental impacts in the main memory unit 360 (Step S604), and then returning back to the flowchart of FIG. 13.

For any of those materials which are determined as not recyclable in the step S601, the controller 100 obtains the environmental impacts of the dumping process of dumping the kind of materials. Specifically, the controller 100 searches the location information database 320 for the distance between the separating factory and the place to dump the waste, based on the information obtained in the step S507 shown in FIG. 14 and information specifying the place to dump the waste recorded in the material information table (Step S605).

The controller 100 searches the transportation means information database 340 for one transportation means suitable for transporting the waste materials (Step S606). In this case, the waste materials are likely to be divided into small pieces, and it is hard to acquire the size information. Note that the transportation means for use in transporting the small pieces of materials is set in advances based on the past statistics data. Hence, the controller 100 determine the set transportation means, and decides the required number of transportation means based on the weight of the materials.

The controller 100 accesses the environmental impact information database 350, to obtain the environmental impacts of the process of transporting the waste materials for the distance between the separating factory and the place to dump the waste, based on the distance information obtained in the step S605 and the transporting means information obtained in the step S606. The controller 100 searches the environmental impact information database 350 for the environmental impacts of the process, wherein the transporting means selected in the step S606 and moves without any load for the distance obtained in the step S605. The controller 100 adds the searched information to the environmental impacts of the transporting process. The controller 100 refers to the environmental impact information evaluation information (by factory) stored in the environmental impact information database 350, and obtains the environmental impacts of the dumping process at the place to dump the waste. The controller 100 adds the obtained environmental impacts to the environmental impacts of the transporting process, so as to calculate the environmental impacts of the dumping process of dumping the materials. Then, the controller 100 temporarily stores thus calculated environmental impacts in the main memory unit 360 (Step S607), and hence returning back to the flowchart of FIG. 13.

The controller 100 adds the environmental impacts obtained in the steps S405, S505, S509, and S605 altogether so as to obtain the environmental impacts while products are used or of the recycling process, and temporarily stores the obtained information in the main memory unit 360 (Step S406).

Similarly, the controller 100 adds the environmental impacts obtained in the steps S512 and S607 altogether so as to obtain the environmental impacts of the dumping process of dumping the products, and temporarily stores the obtained information in the main memory unit 360 (Step S407), and hence completing the process of calculating the environmental impacts of each material.

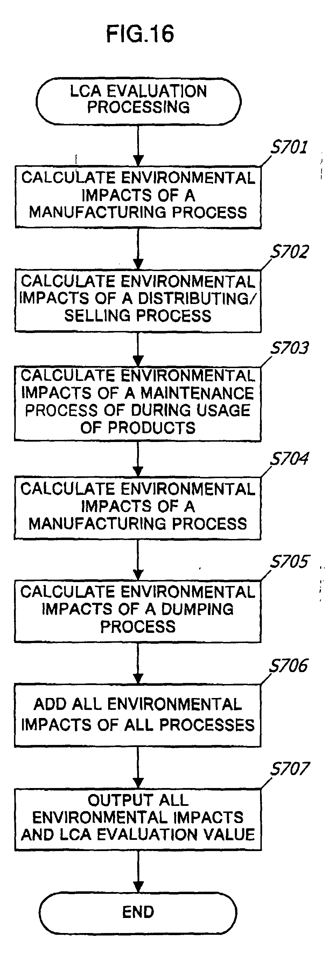

An LCA evaluation process to he carried out by the environmental impact evaluation system 10 according to this embodiment will now be described with reference to the flowchart of FIG. 16.

The controller 100 obtains the environmental impacts of the manufacturing process calculated in the step S117 (Step S701), the environmental impacts of the distribution/vending process calculated in the step S215 (Step S702), the environmental impacts calculated in the step S307 (Step S703), the environmental impacts calculated in the step S406 (Step S704), and the environmental impacts calculated in the step S407 (Step S705).

The controller 100 obtains an LCA evaluation value based on those environmental impacts obtained in the above processes of the steps 701 to 705 (Step S706).

The controller 100 controls the output section 400 to output an evaluation value of the environmental impacts of each of the above processes obtained in the steps 701 to 705 and the LCA evaluation value calculated in the step S706, in response to an instruction from the user through the input section 200, and thus completing the LCA evaluation process (Step S707).

In the above embodiment, in the case where those parts or materials which can not be recycled are transported in the collection/recycling and dumping process, the MHCs for protecting the parts or materials to be transported are not employed. However, in the case where MHCs are employed so as to facilitate the handling of the parts or materials, the transportation means may be determined based on the size of the MHCs to be employed, in accordance with the above process of selecting the MHCs.

In the above embodiment, the group of same parts for forming each kind of products are employed. However, the group of different parts having the same function may be employed. In this case, the product information table in the product information database 310 may store a plurality of entries for the same products. That is, information representing an original group of same parts (the first group of parts) and information representing another group (the second group of parts) of parts including one or more different parts are stored in different part information tables. In the first entry for the same products recorded in the product information table, the part information table corresponding to the first part group is specified. On the contrary, in the first entry for the same kind of products recorded in the product information table, the part information table corresponding to the second part group is specified.

In the case where the user requests to obtain the environmental impacts of to the same kind of products, the controller 100 finds out that a plurality of entries for the kind of products are recorded in the product information table, provides the user with each part information in each of the plurality of entries, and asks the user to select a desired part group. In the case where the user requests to obtain the environmental impacts of the first part group, the controller 100 obtains the environmental impacts of the first part group. Specifically, the controller 100 obtains both of the environmental impacts independent of the difference between the first and second part groups and the environmental impacts depending on the difference between the first and second part groups. Then, the controller 100 adds thus-separately obtained environmental impacts together. In the case where the user requests to obtain the environmental impacts of the second part group, the controller 100 obtains again the environmental impacts in relation to the difference between the first and second part groups, and adds thus obtained environmental impacts to the environmental impacts independent of the difference between the first and second part groups.

Accordingly, the environmental impacts can be calculated with high efficiency in the case where the user wishes to change the elemental parts of each product. At the same time, even in the case where a change is made in the kind of material to be employed in a part, a processing condition at the assembly factory and in the transportation means, the environmental impacts can be obtained with high efficiency.

In the case where the user specifies a plurality of part groups, the controller 100 obtains the environmental impacts independent of the difference between the first and second part groups. At the same time, the controller 100 calculates the environmental impacts of the first and second part groups, depending on the difference between the first and second part groups. Also, the controller 100 calculates the environmental impacts of each of the first and second part groups.

Even in the case where there are a plurality of elemental parts for one kind of products and where the user selects a plurality of elemental part groups at the calculation of the environmental impacts, the controller 100 can calculate the environmental impacts with high efficiency likewise the above. The same can apply to the case where there is a plurality of materials included in each part, processing conditions, and transportation means, etc.

Further, the controller 100 displays/outputs, on the output section 400, calculation results of the environmental impacts of one kind of parts, the environmental impacts of any other kinds of parts and the environmental impacts without any relation to any elemental parts. In addition, the controller 100 displays/outputs, on the output section 400, a calculation result of comparison which is made when any of the above changes is made. In this structure, the user can find out the bottleneck for reducing the environmental impacts with case.

The environmental impact evaluation system of the present invention can be realized using a general computer system, without a dedicated system. For example, a program for executing the above processes and operations is installed into a computer from a medium (floppy disk, CD-ROM, etc.), so as to realize the environmental impact evaluation system 10 executing the above processes. In the case where the above functions of the environmontal impact evaluation system 10 are realized by the OS (Operating System) by itself or in collaboration with applications, any parts other than the OS may be stored on a medium.

The program embedded in a carrier wave can be transmitted through a communications network. For example, the program may be posted on a BBS (Bulletin Board System) or Web page on the communication network, and can be transmitted through the network.

This program is activated, and executed likewise other application programs under the control of the OS so as to execute the above processes.

The environmental impact evaluation system of the above embodiment includes the input section for inputting information required for calculating the environmental impacts and the output section for displaying/outputting a calculation result of the environmental impacts. However, the system may receive the required information from an external device, calculate the environmental impacts based on the received information, and display the calculation result on an external display device. For example, a server computer connected to a terminal device, such as a personal computer, etc. through a network, may be used as the environmental impact evaluation system. In this case, inputting of the information required for obtaining the environmental impacts is done on the terminal device, and the terminal device displays and outputs calculation results of the environmental impacts. In addition, the server computer obtains the environmental impacts, based on the information sent from the terminal device and the information stored in various databases included in a memory unit. Then, the server computer provides the terminal device with the calculation results.

Further, it is not necessary that various databases, such as the product information database, etc., are prepared in a hard disk device installed in the server computer or directly connected to the server computer. Such databases may be connected to the server computer through a network.

Various embodiments and changes may be made thereonto without departing from the broad spirit and scope of the invention. The above-described embodiment is intended to illustrate the present invention, not to limit the scope of the present invention. The scope of the present invention is shown by the attached claims rather than the embodiment. Various modifications made within the meaning of an equivalent of the claims of the invention and within the claims are to be regarded to be in the scope of the present invention.

## Claims

1. A method of evaluating environmental impacts in a product lifecycle, said method **characterized by** comprising the steps of:
selecting a container from a plurality of containers, based on article information regarding a target article to be transported in the product's lifecycle, the container being for use in transporting the target article;
determining one transportation means for transporting the target article, based on the article information, transportation information regarding a condition for transporting the at least one target article, and information specifying the container selected in said container selecting step; and
calculating an environmental impact while the target article is transported by the transportation means determined at said determining step, based on the article information, the transportation information, and the information specifying the container selected in said container selecting step.

2. The method according to claim 1, **characterized in that**:
said article information includes information representing a size and weight of the target article to be transported and also information representing quantity of the at least one target article to be included in a product to be manufactured;
the transportation information includes information representing a distance the target article to be transported;
said container selecting step selects a kind and quantity of the container, based on the information representing the size and weight of the target article and the information representing the quantity of the article to be included in the product to be manufactured; and
said transportation means determining step determines the transportation means and number of the transportation means, based on the information representing the kind and quantity of the container selected at said container selecting step and the information representing the distance the target article is to be transported.

3. The method according to claim 1, **characterized in that**
said calculating step calculates an environmental impact of a process of transporting the target article to be transported by the transportation means determined at the determining step, based on an energy consumption, resource consumption and exhaust amount of the transportation means, in a case where the transportation means is used based on the article information and transportation information.

4. The method according to claim 1, **characterized by** further comprising the steps of:
calculating environmental impacts respectively of processes of manufacturing the product, distributing/vending (selling) the product, using/maintaining the product, collecting/recycling the product, and dumping the product; and
calculating environmental impacts in the product's lifecycle, based on the environmental impacts of the processes, obtained in said environmental impact calculating step, and said method **characterized in that**
said step of obtaining the environmental impacts respectively of the processes calculates the environmental impacts respectively at the processes, based on the environmental impact calculated at said step of obtaining the environmental impact while the target article is transported.

5. The method according to claim 1, **characterized by** further comprising the step of
obtaining the article information and the transportation information from an input device.

6. The method according to claim1, **characterized by** further comprising the step of
storing the article information and the transportation information in a database.

7. An environmental impact evaluation system including a controller (100), which performs operations necessary for calculating environmental impacts in a product's lifecycle, and a memory unit (300), which stores information necessary for said controller to perform the operations necessary for calculating the environmental impacts, and said system **characterized in that** said controller (100):
selects, from a plurality of containers, a container for use in transporting a target article to be transported, based on article information regarding the target article to be transported in the product's lifecycle and transportation information regarding a condition for transporting the target article to be transported;
determines one transportation means for transporting the target article, based on the article information, the transportation information and information specifying the selected container; and
calculates environmental impacts of a process of transporting the target article using the determined transportation means; based on the article information, the transportation information and the information specifying the selected container.

8. The environmental impact evaluation system according to claim 7, **characterized in that** said controller (100):
calculates environmental impacts respectively of processes of manufacturing the product, distributing/vending the product, using/maintaining the product, collecting/recycling the product, and dumping the product, based the calculated environmental impact of the transportation of the at least one target article; and
calculates environmental impacts in the product's lifecycle, based on the calculated environmental impacts of the respective processes.

9. The environmental impact evaluation system according to claim 7, **characterized by** further comprising
an input section (200) which inputs the article information and the transportation information.

10. The environmental impact evaluation system according to claim 7, **characterized by** further comprising:
a product information database (310) which stores the article information including information representing a size and weight of the target article to be included in the product to be manufactured and information representing quantity of the target article to be included in the product to be manufactured;
a place information database (320) which stores the transportation information including information representing a distance the target article to be transported;
a container information database (330) which stores container information including size information representing a size of each of the plurality of containers for use in transporting the target article;
a transportation means information database (340) which stores transportation means information including information representing a kind, size and consumable energy of the transportation means for use in transporting the target article; and
an environmental impact information database (350) which stores environmental impact information, representing environmental impacts of a time the transportation means is used in association with a condition for using the transportation means.

11. A program for controlling a computer to execute a method **characterized by** comprising the steps of:
selecting, from a plurality of containers, a container for use in transporting a target article to be transported in a product's lifecycle, based on article information regarding the target article and transportation information regarding a condition for transporting the target article to be transported;
determining one transportation means for transporting the target item, based on the article information, the transportation information and information specifying the container selected at said selecting step; and
calculating an environmental impact of a process wherein the transportation means determined at said determining step is used, based on the article information, the transportation information, and the information specifying the container selected at the selecting step.

12. A method of evaluating environmental impacts **characterized by** comprising the steps of: storing product information including information representing product information representing a plurality of parts forming a product to be manufactured, one or more materials forming each of the plurality of parts and one or more assembly factories for manufacturing the product, and transportation information including information representing one or more transportation means for transporting the product; and calculating environmental impacts respectively of processes in a product's lifecycle of the product, based on the product information and the transportation information which are stored in said storing step, and said method **characterized in that**:
said calculating step, in a case where there arc a plurality of combinations of the parts forming the product, the one or more materials, the one or more assembly factories and the one or more transportation means,
obtains common elements between a first combination and second combination of the plurality of combinations and non-common elements therebetween; and
calculates environmental impacts of a product based on the first combination, in such a manner that environmental impacts depending on the common elements between the first and second combinations are separated from environmental impacts independent of the non-common elements therebetween.

13. The method according to claim 12, **characterized in that** said step of calculating the environmental impacts may further
calculates environmental impacts depending on the non-common elements between the first and second combinations, in a case where environmental impacts of a product based on the second combination is obtained, and
adds the environmental impacts depending on the calculated non-common elements to environmental impacts independent of the non-common elements calculated in a case where to calculate the environmental impacts of the product based on the first combination, so as to calculate the environmental impacts of the product based on the second combination.

14. The method according to claim 13, **characterized by** further comprising the step of
displaying, in a comparison format, the environmental impacts of the product based on the first combination and the environmental impacts of the product based on the second combination.

15. A method of evaluating environmental impacts, said method **characterized by** comprising the steps of:
calculating environmental impacts of a travelling process wherein a maintenance staff moves to a place to perform a maintenance process for a product, based on information representing an amount of resources necessary for the maintenance process, information representing an average distance the maintenance staff moves and information representing an average number of times the maintenance staff performs the maintenance process;
calculating environmental impacts of a part to be replaced during the maintenance process and included in the product, based on information representing environmental impacts of each part to be replaced during the maintenance process and information representing the average number of times the maintenance staff performs the maintenance process; and
calculating environmental impacts of the maintenance process for the product, based on information representing environmental impacts of the travelling process calculated in said step of calculating the environmental impacts of the travelling process and information representing environmental impacts representing the part to be replaced obtained in said step of calculating the environmental impacts of the part to be replaced.

16. The method according to claim 15, **characterized in that**
the information representing the amount of resources necessary for the maintenance process includes information representing number of maintenance staff required for the maintenance process for the product, one travelling means using which the maintenance staffs move to the place where the maintenance process is performed, and a maintenance equipment, and said method **characterized by** further comprising the step of
storing the information representing the amount of resources and the average number of times the maintenance staff performed the maintenance process, information representing whether each part included in the product needs to be replaced and information representing the average number of times each of parts included in the product is replaced with a new part.
